(19) Europäisches Patentamt / European Patent Office / Office européen des brevets

(11) **EP 2 418 181 B1**

(12) **EUROPEAN PATENT SPECIFICATION**

(45) Date of publication and mention
of the grant of the patent:
**07.09.2016 Bulletin 2016/36**

(51) Int Cl.:
**C03B 37/012** (2006.01)   **C03B 37/018** (2006.01)

(21) Application number: **11174603.8**

(22) Date of filing: **20.07.2011**

(54) **A METHOD OF FABRICATING AN OPTICAL FIBER PREFORM**

VERFAHREN ZUR HERSTELLUNG EINER OPTISCHEN FASERVORFORM

PROCÉDÉ DE FABRICATION D'UNE PRÉFORME DE FIBRES OPTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2010  FR 1056542
11.08.2010  US 372629 P**

(43) Date of publication of application:
**15.02.2012  Bulletin 2012/07**

(73) Proprietor: **Draka Comteq B.V.
1083 HJ Amsterdam (NL)**

(72) Inventors:
• **De Montmorrilon, Louis-Anne**
**78000 Versailles (FR)**
• **Gooijer , Frans**
**5627 ME Eindhoven (NL)**
• **Sillard, Pierre**
**78150 Le Chesnay (FR)**

(74) Representative: **Algemeen Octrooi- en
Merkenbureau B.V.
P.O. Box 645
5600 AP Eindhoven (NL)**

(56) References cited:
**WO-A1-2007/009450     US-A- 5 044 724
US-A- 5 106 402**

• **GEITTNER P ET AL: "HYBRID TECHNOLOGY
FOR LARGE SM FIBRE PREFORMS", OPTICAL
FIBER COMMUNICATION CONFERENCE. NEW
ORLEANS, 25 - 28 JAN., 1988; [OPTICAL FIBER
COMMUNICATION CONFERENCE. (OFC)], NEW
YORK, IEEE, US, vol. VOL. 1, no. 1988, 25 January
1988 (1988-01-25), pages 230-233, XP000011694,
ISBN: 978-1-55752-022-7**

**EP 2 418 181 B1**

**Description**

The present invention relates to the field of optical fibers, and more specifically to a method of fabricating a preform for use in drawing an optical fiber that presents greatly reduced bending losses.

In known manner, an optical fiber is made by being drawn from a preform in a fiber-drawing tower. The operation of drawing down an optical fiber to scale consists in placing the preform vertically in a tower and in drawing a strand of optical fiber from one end of the preform. For this purpose, a high temperature is applied locally to one end of the preform until the silica is softened, and the speed of fiber-drawing and the temperature are then controlled continuously during fiber-drawing since they determine the diameter of the optical fiber.

An optical fiber conventionally comprises an optical core having the function of transmitting and possibly also amplifying an optical signal, and optical cladding having the function of confining the optical signal in the core. For this purpose, the refractive indices of the core $n_c$ and of the cladding $n_g$ are such that $n_c > n_g$. As is well known, the propagation of an optical signal in a monomode optical fiber comprises a fundamental mode guided in the core and secondary modes guided over a certain distance in the core-cladding assembly, referred to as cladding mode.

For line optical fibers in optical fiber transmission systems, it is conventional to use step index optical fibers, also known as single mode fibers (SMF). For reasons of compatibility between optical systems from different manufacturers, the International Telecommunication Union (ITU) has defined a standard with a recommendation having the reference ITU-T G.652, that needs to be complied with by a standard single mode fiber (SSMF).

Furthermore, the continuing development of optical fiber systems to reach the subscriber, known as fiber to the home (FTTH) or fiber to the curb (FTTC) causes other constraints to arise that optical fibers need to satisfy. Specifically, a major challenge for such FTTC or FTTH applications lies in reducing bending losses while conserving certain optical transmission parameters.

The ITU has thus defined a standard with recommendations having the references ITU-T G.657A and ITU-T G.657B that need to be satisfied by optical fibers for FTTH applications, and in particular, these standards impose maximum bending losses. Recommendation G.657A imposes limit values for bending losses, but seeks above all to conserve compatibility with Recommendation G.652, in particular in terms of mode field diameter (MFD) and chromatic dispersion. In contrast, Recommendation G.657.B does not impose compatibility with Recommendation G.652, but does impose stricter limits on bending losses than Recommendation G.657.A1. Tables I and II below reproduce some of the constraints imposed by Recommendations G.652 and G.657 concerning bending losses (Table I) and optical transmission parameters (Table II).

Table I

| Radius | Number of turns | Wavelength | | Maximum macrobending losses | | | |
|---|---|---|---|---|---|---|---|
| (mm) | | (nm) | (db) | (db) | (db) | (db) | (db) |
| | | | G.652.D | G.657.A1 | G.657.A2 | G.657.B2 | G.657.B3 |
| **30** | 100 | 1550 | | | | | |
| | | 1625 | 0.1 | | | | |
| **15** | 10 | 1550 | | 0.25 | 0.03 | | |
| | | 1625 | | 1 | 0.1 | | |
| **10** | 1 | 1550 | | 0.75 | 0.1 | | 0.03 |
| | | 1625 | | 1.5 | 0.2 | | 0.1 |
| **7.5** | 1 | 1550 | | | 0.5 | | 0.08 |
| | | 1625 | | | 1 | | 0.25 |
| **5** | 1 | 1550 | | | | | 0.15 |
| | | 1625 | | | | | 0.45 |

2

Table II

| Parameter | Detail | Unit | G.652.D | G.657.A | G.657.B |
|---|---|---|---|---|---|
| MFD@1310nm | Range of nominal values | ($\mu$m) | 8.6-9.5 | 8.6-9.5 | 6.3-9.5 |
| | Tolerance | | $\pm$ 0.6 | $\pm$ 0.4 | $\pm$ 0.4 |
| Cut-off wavelength | Maximum | (nm) | 1260 | 1260 | 1260 |
| Chromatic dispersion coefficient | $\lambda_{0min}$ | (nm) | 1300 | 1300 | |
| | $\lambda_{0max}$ | (nm) | 1324 | 1324 | |
| | $S_{0max}$ | (ps/nm$^2$xkm) | 0.092 | 0.092 | |

Fabricating optical fibers that comply with the constraints of Recommendations G.652 and G.657 has become a major economic challenge.

The technology of making optical fibers with holes enables excellent performance to be achieved in terms of bending losses, but that technology is complex and expensive to implement, and at present it is not suitable for use in making optical fibers for FTTH systems since they are low-cost systems.

Documents EP-A-1 845 399 and EP-A-1 785 754 propose optical fiber profiles with a buried trench that enables bending losses to be limited, while conserving the optical transmission parameters of an SSMF.

WO2007/009450 relates to a technique wherein: a first rod is prepared by depositing into a first tube layers constituting a first part of the core and internal cladding; subsequently the first rod is etched to remove the tube and the cladding; a second rod is prepared by depositing into a second tube layers constituting a second part of the core and internal cladding; and the second rod is collapsed over the first core rod.

A buried trench can be made during fabrication of the preform by incorporating dopants that lower the refractive index of the transmission material, typically silica. The most commonly used dopant is fluorine. For example, the buried trench may be constituted by the tube of the primary preform that may be made of fluorine-doped silica, as described for example in document FR-A-2 896 795 (also published under the number US-A-2008/031582). Nevertheless, that solution does not enable profiles to be obtained with a trench that is deep nor does it enable the uniformity of the refractive index of the trench to be thoroughly controlled. In order to guarantee minimum bending losses, without harming the optical transmission parameters imposed by Recommendation G.652, it is necessary for the uniformity of the buried trench to be well controlled.

An optical fiber may be fabricated from a preform comprising a primary preform constituted by a tube of pure or doped silica in which layers of doped and/or pure silica are deposited in succession in order to form inner cladding and a central core. Such a primary preform is fabricated on a deposition bench. The primary preform is then overcladded or fitted with a sleeve in order to increase its diameter and form a preform that is suitable for use in a fiber-drawing tower. In this context, the term "inner" cladding designates the cladding formed inside the tube and the term "outer" cladding designates the cladding formed outside the tube. Deposition operations inside the tube are of the chemical vapor deposition (CVD) type. This type of deposition is performed by injecting mixtures of gas into the tube and ionizing said mixtures. CVD type deposition covers modified chemical vapor deposition (MCVD), furnace chemical vapor deposition (FCVD), and plasma-enhanced chemical vapor deposition (PCVD).

After layers corresponding to the core and the inner cladding have been deposited, the tube is converted into a solid rod by an operation referred to as "collapsing". This produces the primary preform that is constituted by a silica rod. The primary preform is then overcladded, generally with grains of natural silica for reasons of cost. Overcladding may be performed by plasma deposition in which grains of doped or pure natural silica are deposited by gravity and melted by a plasma torch so as to be vitrified on the periphery of the primary preform.

The fluorine doping of an inner sheath of the primary preform may be achieved effectively by PCVD type deposition, as described in above-mentioned documents EP-A-1 845 399 or EP-A-1 785 754. That technique allows a large quantity of the fluorine dopants to be incorporated so as to make a buried trench that is deep and uniform.

Other techniques also exist for fabricating an optical fiber preform.

For example, document EP-A-1 000 909 describes a method of fabricating a preform in which a core-forming rod is inserted in a substrate tube that is subsequently overcladded. The substrate tube presents different doping zones obtained by outside vapor deposition (OVD), i.e. by vitrifying grains of silica mixed with a dopant gas. The substrate tube may in particular include a fluorine-doped zone. Nevertheless, such a method does not enable a deep trench to be made, nor does it enable the uniformity of the buried trench to be well controlled.

Documents WO-A-2008/087132 and WO-A-2010/003856 describe methods of fabricating fluorine-doped tubes for fitting as sleeves on primary preforms in order to constitute optical fiber preforms. Those documents propose making the tube from a first substrate tube of fluorine-doped silica obtained by plasma outside deposition (POD) or OVD. A second tube of fluorine-doped silica is formed on the first by POD, the second tube having a dopant concentration that is different from that of the first tube; thereafter silica overcladding is applied to the assembly. That produces a fluorine-doped tube with two zones of different doping. Nevertheless, such methods do not enable the uniformity of the doped zones to be well controlled, nor does it enable deeply buried trenches to be achieved.

Document US-A-2007/0003198 describes a method of fabricating an optical fiber preform. That method proposes fabricating firstly a rod forming the core by external vapor axial deposition (VAD) or OVD, and secondly forming buried cladding from a tube in which a fluorine-doped zone is deposited by MCVD. The core rod is subsequently inserted inside the tube having the buried trench, and the assembly is overcladded. That document identifies an increase in OH bonds when the core is formed by MCVD from an inexpensive tube that does not present a high level of purity. The method described in that document thus seeks to limit optical losses in the core, in particular when an optical fiber having a profile with a buried trench is to be fabricated.

It is also desirable to fabricate preforms having large capacity. The capacity of a preform is defined as the length of optical fiber that can be drawn from that preform. The greater the diameter of the preform, the greater it capacity. In order to reduce fabrication costs, it is desirable to provide optical fibers of great linear length from a given preform. It is therefore desirable to fabricate preforms of large diameter while complying with dimensional constraints relating to the diameter of the central core and the diameter of the optical cladding. After overcladding, the final preform must present the same ratio of core diameter divided by cladding diameter as is to be presented by the optical fiber drawn therefrom.

During fabrication of the preform, it is also desirable to limit as much as possible the amount of glass that needs to be deposited before overcladding. This advantageously reduces the cost of fabricating the optical fiber because glass doped by a CVD method (MCVD, FCVD, PCVD), or a VAD or an OVD method is more expensive than the glass of the tube or than the grains of natural silica used for plasma deposition while overcladding. It should also be observed that that advantageously enables a greater length of optical fiber to be fabricated without increasing the capacity of the deposition bench. Fabricating preforms of large capacity and/or preforms with a smaller fraction of deposited glass thus enables productivity to be improved.

Furthermore, it is advantageous for this improvement in productivity to be obtained without substantial modification to the deposition benches currently available. Typically a deposition bench presents limitations in terms of the maximum capacity of glass it is capable of depositing; this limitation is generally expressed in terms of cross-section area (CSA). In known manner, the CSA of a deposited layer having circular symmetry is equal to $\pi(R_{ext}^2 - R_{int}^2)$, where $R_{ext}$ and $R_{int}$ are the outside and inside radii of the layer. The maximum CSA that can be deposited while fabricating a preform depends on the type of bench used. An optical fiber manufacturer may thus have deposition benches available that present different capacities, i.e. different depositable CSAs.

The fabrication of a large-diameter preform for drawing into an optical fiber that is insensitive to bending, i.e. that satisfies the G.657 recommendations, implies forming a buried trench of great width in the primary preform, in order to comply with ratios scaling from the preform to the drawn optical fiber.

The methods described with reference to the above-mentioned documents do not enable a trench to be made that is both deeply buried and thoroughly uniform so as to satisfy constraints concerning limited bending losses, and sufficiently wide so as to enable a large capacity preform to be made at a cost that is competitive for FTTH or FTTC type applications.

In particular, the techniques that consist in using a fluorine-doped tube do not enable sufficient control to be obtained over the buried trench to guarantee compliance with the constraints of Recommendation G.657.

Similarly, depositing a buried trench by MCVD does not make it possible to make a trench that is deep, uniform, and of great width in order to constitute a preform of large capacity.

Furthermore, fabricating a preform of large capacity requires the use of a deposition bench having a large depositable CSA. Such deposition benches are uncommon.

There therefore exists a need for a method of fabricating an optical fiber preform that enables a large capacity preform to be made at a competitive price and without substantial modification to available deposition benches, for making optical fibers that comply with the constraints of Recommendations G.652 and G.657.

To this end, the invention proposes separating the fabrication of the core and the fabrication of the buried trench in order to increase productivity.

More particularly, the invention provides a method of fabricating an optical fiber preform according to claim 1.

In an implementation, the second rod is prepared by plasma-assisted chemical vapor deposition.

In an implementation, the first rod is prepared by any technique selected from modified chemical vapor deposition, furnace-assisted CVD, or plasma-assisted CVD.

In an implementation, the method further comprises a step consisting in stretching the first rod before fitting the second rod as a sleeve.

In an implementation, the method further comprises a step consisting in chemically etching at least a portion of the first tube before fitting the second rod as a sleeve.

In an implementation, the method further comprises a step of overcladding the outside of the second rod or fitting a sleeve thereto in order to reach a final preform diameter greater than or equal to 140 millimeters (mm). The cross-section area of the zones deposited in each of the rods remains less than 700 square millimeters ($mm^2$).

In an implementation, the buried trench is deposited with dopants at a concentration controlled so that the buried trench presents a refractive index difference relative to the outer cladding lying in the range $-4x10^{-3}$ to $-10x10^{-3}$. The concentration of dopants is controlled in such a manner that the buried trench presents longitudinal variation of index of less than 10% over the entire length of the second rod.

In an implementation, the buried trench is deposited until the buried trench presents a cross-section area lying in the range $300$ $mm^2$ to $700$ $mm^2$. The cross-section area of the buried trench presents longitudinal variation of less than 10% over the entire length of the second rod.

In an implementation, the buried trench is deposited with dopant concentration control until the buried trench presents a value for the product of the CSA of the buried trench multiplied by the refractive index difference $\Delta n_3$ of the buried trench and divided by the number Pi ($\pi$) lying in the range $-2550x10^{-3}$ $mm^2$ to $-760x10^{-3}$ $mm^2$. The value for the product of the CSA of the buried trench multiplied by the refractive index difference $\Delta n_3$ of the buried trench and divided by the number Pi ($\pi$) presents longitudinal variation of less than 15% over the entire length of the second rod.

The invention also provides an optical fiber preform that comprises, from the center towards the periphery, a central core, intermediate cladding, a buried trench, and outer cladding, wherein the buried trench presents:

- a refractive index difference relative to the outer cladding lying in the range $-4x10^{-3}$ to $-10x10^{-3}$ with longitudinal variation of less than 10% over the entire length of the preform; and
- a value for the product of the CSA of the buried trench multiplied by the refractive index difference $\Delta n_3$ of the buried trench and divided by the number Pi ($\pi$) lying in the range $-2550x10^{-3}$ $mm^2$ to $-760x10^{-3}$ $mm^2$ with longitudinal variation of less than 15% over the entire length of the preform.

In an embodiment, the buried trench presents a cross-section area lying in the range $300$ $mm^2$ to $700$ $mm^2$. The cross-section area of the buried trench presents longitudinal variation, over the entire length of the preform, of less than 10%.

In an embodiment, the preform presents a diameter greater than or equal to 140 mm.

In an embodiment, the core presents a refractive index difference relative to the outer cladding lying in the range $4x10^{-3}$ to $6x10^{-3}$.

In an embodiment, the core presents a refractive index difference relative to the intermediate cladding lying in the range $4x10^{-3}$ to $6x10^{-3}$.

The invention also provides a method of fabricating an optical fiber, comprising the steps of:

- fabricating a preform by the method of the invention; and
- drawing an optical fiber from said preform in a fiber-drawing tower.

The invention also provides an optical fiber drawn from the preform of the invention; and an optical unit receiving at least a portion of fiber of the invention or at least a portion of fiber fabricated by the method of the invention. The invention finds a particular application in an optical fiber transmission system, including at least a portion of fiber of the invention or at least a portion of fiber fabricated by the method of the invention.

Other characteristics and advantages of the invention appear on reading the following description of embodiments of the invention given by way of example and with reference to the accompanying figures, in which:

- Figure 1 shows an example of a setpoint profile for an optical fiber preform fabricated using the method of the invention;
- Figure 2 is a diagram of rods fabricated for constituting the optical fiber preform in the method of the invention; and
- Figure 3 is a diagrammatic cross-section of an optical fiber preform fabricated by the method of the invention.

The optical fiber preform of the invention comprises a central core, an intermediate cladding, a buried trench, and outer cladding. The term "buried trench" is used to mean a actually obtained after drawing an optical fiber from a preform possibly presenting a profile that is slightly different.

The optical fiber preform of the invention comprises a central core presenting a refractive index difference $\Delta n_1$ relative to the outer cladding that acts as optical cladding, intermediate cladding presenting a refractive index difference $\Delta n_2$ relative to the outer cladding, and a buried trench presenting a refractive index difference $\Delta n_3$ relative to the outer cladding. The refractive indices in the central core, in the intermediate cladding, and in the buried trench are substantially constant across their respective entire widths; however other profiles could be envisaged. The width of the core is defined by its radius $r_1$, the widths of the cladding and of the trench are defined by their respective outer radii $r_2$ and $r_3$.

In order to define a setpoint refractive index profile for an optical fiber, it is the general practice to take the refractive index value of the outer cladding as the reference. The refractive index values of the central core, and of the intermediate and buried cladding are then presented as refractive index differences $\Delta n_{1,2,3}$. In general, the outer cladding is made of silica, however said cladding may be doped in order to increase or decrease its refractive index, e.g. in order to modify the propagation characteristics of the signal.

It is desired to fabricate a preform for an optical fiber that satisfies the criteria of Recommendations G.652 and G.657. The preform thus presents a central core having a refractive index difference $\Delta n_1$ relative to the outer cladding that lies in the range $4x10^{-3}$ to $6x10^{-3}$, and is typically about $5x10^{-3}$; an intermediate cladding having a refractive index difference $\Delta n_2$ relative to the outer cladding lying in the range $-1x10^{-3}$ to $1x10^{-3}$; and a buried trench having a refractive index difference $\Delta n_3$ relative to the outer cladding lying in the range $-4x10^{-3}$ to $-10x10^{-3}$. It is also preferable for the difference between the central core and the intermediate cladding ($\Delta n_1-\Delta n_2$) to lie in the range $4x10^{-3}$ to $6x10^{-3}$. Once the preform has been drawn, the optical fiber may present a central core having a radius $r_1$ lying in the range 3.5 micrometers ($\mu$m) to 4.5 $\mu$m, intermediate cladding having a radius $r_2$ lying in the range 7.5 $\mu$m to 14.5 $\mu$m, and a buried trench having a radius $r_3$ lying in the range 13 $\mu$m to 18 $\mu$m.

The optical fiber obtained from a preform of the invention may also present one or more of the following characteristics:

· the surface integral of the central core, $V_{01}$, defined as:

$$V_{01} = \int_0^{r_1} \Delta n(r).dr \approx r_1 \times \Delta n_1$$

lies in the range $17x10^{-3}$ $\mu$m to $24x10^{-3}$ $\mu$m;
· the surface integral of the buried trench core, $V_{03}$, defined as:

$$V_{03} = \int_{r_2}^{r_3} \Delta n(r).dr \approx (r_3 - r_2) \times \Delta n_3$$

lies in the range $-55x10^{-3}$ $\mu$m to $-25x10^{-3}$ $\mu$m; and
· the volume integral of the buried trench, $V_{13}$, defined as:

$$V_{13} = 2.\int_{r_2}^{r_3} \Delta n(r).rdr \approx (r_3{}^2 - r_2{}^2) \times \Delta n_3$$

lies in the range $-1200x10^{-3}$ square micrometers ($\mu$m$^2$) to $-600x10^{-3}$ $\mu$m$^2$.

Such an optical fiber presents a mode field diameter lying in the range 8.6 $\mu$m to 9.5 $\mu$m at a wavelength of 1310 nanometers (nm), a zero chromatic dispersion wavelength lying in the range 1300 nm to 1324 nm, an in-cable cut-off wavelength of less than 1260 nm, and bending losses satisfying the criteria of the G.657 recommendations as set out in Table I above.

It is therefore desired to fabricate a large- capacity preform for an optical fiber satisfying the above criteria.

The fabrication method of the invention proposes separately preparing firstly the central core together with at least a portion of the intermediate cladding, and secondly the buried trench together with at least a portion of the outer cladding.

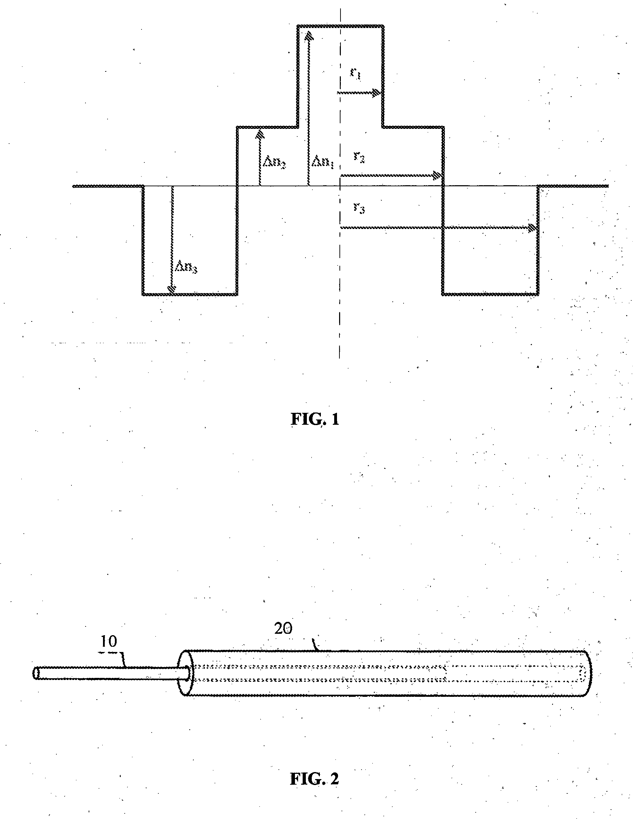

With reference to Figure 2, a first rod 10 is prepared. The first rod 10 constitutes at least the central core ($\Delta n_1$, $r_1$) and optionally at least a portion of the intermediate cladding ($\Delta n_2$, $r_2$). The intermediate cladding ($\Delta n_2$, $r_2$) may also be contained completely within the first rod 10.

The first rod 10 is prepared by chemical vapor deposition (CVD) in a first tube of pure or doped silica; for example, the first rod 10 may be prepared using any of the techniques selected from modified chemical vapor deposition (MCVD), furnace-assisted CVD (FCVD), or plasma-assisted CVD (PCVD).

Still with reference to Figure 2, a second rod 20 is also prepared likewise by chemical vapor deposition (CVD), preferably by using PCVD type deposits. The second rod 20 is made from a second tube, of pure or doped silica, in which CVD deposits are made to constitute at least the buried trench ($\Delta n_3$, $r_3$) and optionally at least a portion of the

intermediate cladding ($\Delta n_2$, $r_2$). The starting tube for the second rod 20 may constitute a portion of the outer cladding or a portion of second intermediate cladding.

PCVD makes it possible to form a buried trench in the second rod 20 that is very deep and of great width while ensuring good control over the uniformity of doping within the trench. The buried trench deposited in the second rod 20 presents a refractive index difference $\Delta n_3$ relative to the outer cladding lying in the range $-4 \times 10^{-3}$ to $-10 \times 10^{-3}$ with the refractive index being controlled longitudinally to within $\pm 10\%$. The buried trench deposited in the second rod 20 presents a CSA lying in the range 300 mm$^2$ to 700 mm$^2$ with area being controlled longitudinally to within $\pm 10\%$. In particular, it is desirable for the volume of the buried trench, defined as the product of the CSA of the buried trench multiplied by the refractive index difference $\Delta n_3$ of the buried trench and divided by the number Pi ($\pi$) to lie in the range $-2550 \times 10^{-3}$ mm$^2$ to $-760 \times 10^{-3}$ mm$^2$ and for it to be controlled longitudinally to within $\pm 15\%$. The refractive index and the CSA are controlled longitudinally over the entire length of the preform. A preform typically presents a length lying in the range 700 mm to 1500 mm, and is generally about 1 meter (m). Deposition in the second tube is interrupted after the buried trench has been formed, optionally after a portion of intermediate cladding has been deposited.

As shown in Figure 2, the second rod 20 is hollow; it can therefore be fitted on the first rod 10 as a sleeve. Where necessary, the first rod 10 may be stretched a little before the second rod is fitted thereon as a sleeve in order to reduce its CSA and comply with scaling constraints for the desired fiber profile. In another embodiment, the size of the first rod 10 may be reduced prior to the second rod 20 being fitted as a sleeve thereon by using a chemical etching method. Such a chemical etching method serves not only to reduce the CSA of the first rod 10 but may also limit the contribution of the first deposition tube to optical losses. The purity of a deposition tube is generally not as good as that of the glass that is deposited by the CVD method. The first tube, constituting all or part of the intermediate cladding, is thus a possible source of degraded optical losses if it is not far enough away from the core of the optical fiber and/or if it is not sufficiently pure.

The second rod 20 fitted as a sleeve on the first rod 10, where appropriate after stretching and/or chemically etching the first rod as described above, constitutes a primary preform that can be overcladded to reach the total diameter needed to conserve the scaling ratios with the intended fiber profile. Depending on the implementation, overcladding may be performed on the second rod 20 before or after it is fitted as a sleeve on the first rod 10. In known manner, overcladding may be performed by depositing pure or doped silica grains on the outside or by fitting a tube as a sleeve on the primary preform. With a preform of large size, building out is preferably performed with grains of silica.

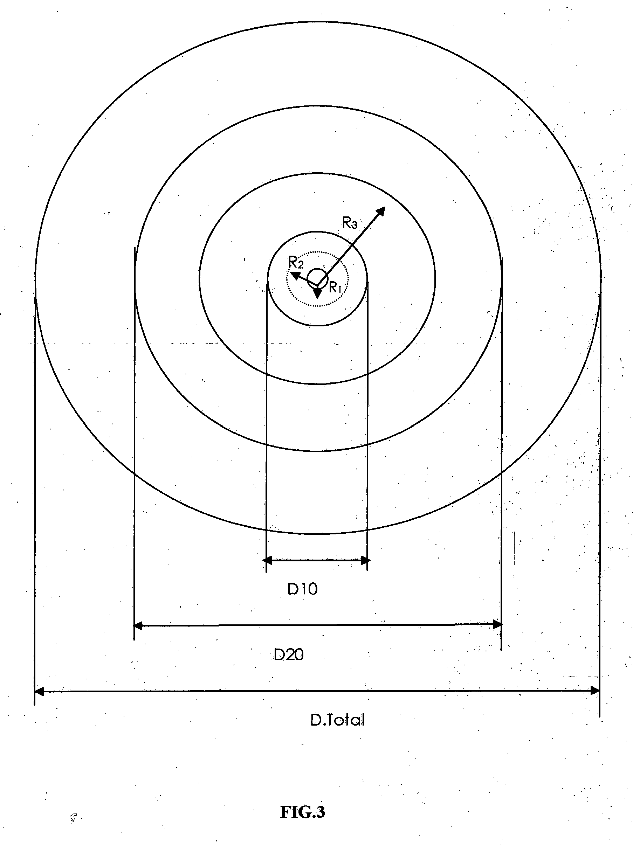

Figure 3 is a diagram of an example of a final preform obtained using the fabrication method of the invention. The central core of the preform presents a radius $R_1$. The intermediate cladding comprises a deposited portion of radius $R_2$ and the first tube of the first rod having an outside diameter D1; the diameter D10 of the tube may have been reduced by chemical etching before it is inserted in the second rod; the tube of the first rod 10 may even be removed completely by chemical etching, as described below with reference to certain examples. The buried trench presents a radius $R_3$; it is deposited in a second tube of outside diameter D20. The assembly comprising the second rod fitted as a sleeve on the first rod is overcladding to reach a total diameter D.Total.

The method of the invention makes it possible to fabricate fat preforms without it being necessary to modify the performance of deposition benches. The numbers of the layers deposited by CVD in each of the rods 10 and 20 remains limited so costs is under control. Only the layers corresponding to the central core and possibly to a portion of the intermediate cladding are deposited in the first rod 10; and only the layers corresponding to the buried trench and possibly to a portion of the intermediate cladding are deposited in the second rod. In an embodiment almost all or all of the intermediate cladding is present in first rod 10. Deposition benches of medium size can therefore be used to form each of the rods 10 and 20. In particular, the CSAs of the zones deposited in each of the rods 10, 20 are less than 700 mm$^2$ for a final preform having a diameter greater than or equal to 140 mm.

The method of the invention also makes it possible to limit the CSA proportions of the zones obtained by deposition, in the first rod 10 and in the second rod 20, relative to the size of the preform: the presence of the deposition tube of the first rod 10 replaces a portion of the deposited glass. Specifically, for a given profile, it has been found that it is possible to obtain a reduction in the ratio of the CSA of all of the deposited zones, ignoring the overcladding, divided by the total CSA of the preform that amounts to 5% or more. The cost of fabricating a preform of large size is thus limited and investment in deposition bench equipment is not essential.

The preform fabricated by the method of the invention is designed to be drawn to produce an optical fiber that satisfies the criteria of Recommendations G.652, G.657.A2, and G.657.B2, and even the criteria of Recommendation G.657.B3 in addition to the three preceding recommendations. To this end, the scaling ratios between the preform and the drawn fiber require preform dimensions such that the buried trench presents a radius $r_3$ lying in the range 13 $\mu$m to 18 $\mu$m for an optical fiber having a diameter of 125 $\mu$m. Specifically, the ratio between the outside radius of the buried trench and the radius of the overcladded preform must lie in the range 0.208 to 0.288.

CVD, and in particular PCVD of the buried trench makes it possible to provide a trench that is buried deeply, with a refractive index difference relative to the outer cladding lying in the range $-4 \times 10^{-3}$ to $-10 \times 10^{-3}$, and that is of very large size, with a CSA lying in the range 300 mm$^2$ to 700 mm$^2$, while ensuring good scaling of the buried trench so as to avoid degrading the performance of the optical fiber. Specifically, the buried trench presents longitudinal variation of index along the preform of less than 10% and longitudinal variation of CSA of less than 10%. Advantageously, the volume of the trench lies in the range $-2550 \times 10^{-3}$ mm$^2$ to $-760 \times 10^{-3}$ mm$^2$ and presents longitudinal variation of less than 15%.

Tables III to V below give examples of preforms made by the method of the invention in comparison with fiber preforms of the prior art.

The preforms of examples 1-1, 1-2, and 2, of the invention, are for drawing into fibers that satisfy the criteria of Recommendations G.652, G.657.A2, and G.675.B2 when the trench presents a refractive index difference $\Delta n_3$ relative to the outer cladding equal to about $-7 \times 10^{-3}$. These fibers also satisfy Recommendation G.657.B3 for a deeper trench, presenting a refractive index difference $\Delta n_3$ relative to the outer cladding equal to about $-10 \times 10^{-3}$.

The preforms of examples 3-1, 3-2, and 3-3, of the invention, are for drawing into fibers satisfying the criteria of Recommendations G.652, G.657.A2, and G.657.B2 when the trench presents a refractive index difference $\Delta n_3$ with the outer cladding equal to about $-5 \times 10^{-3}$. These fibers also satisfy Recommendation G.657.B3 for a deeper trench, presenting a refractive index difference $\Delta n_3$ relative to the outer cladding equal to about $-7 \times 10^{-3}$.

The comparative examples 1A and 3A correspond to prior art preforms fabricated on a bench having relatively small capacity with a deposited CSA equal to about 340 mm$^2$. Comparative example 2A corresponds to a prior art preform fabricated on a bench having relatively large capacity with a deposited CSA equal to about 550 mm$^2$. Comparative examples 1 B, 2B, and 3B correspond to extrapolations of prior art preforms fabricated on benches having very large capacities with deposited CSAs equal to about 800 mm$^2$, 1300 mm$^2$, and 1100 mm$^2$, respectively. Examples 1B, 2B, and 3B are fictitious and represent what it ought to be possible to achieve on benches having very large capacities; these fictitious examples were devised by scaling-up extrapolation from examples 1A, 2A, and 3A.

Examples 1-1 and 1-2 of the invention show that it is possible to achieve the same capacity as fictitious example 1 B while using deposition benches of smaller capacity. The same applies for example 2 of the invention compared with fictitious example 2B and examples 3-1, 3-2, and 3-3 of the invention relative to fictitious example 3B.

The intended profiles for examples 1-1 and 1-2 are identical. The difference between these two examples lies in the composition of the intermediate cladding of the primary preform. In example 1-1 the intermediate cladding is constituted by a deposited portion having a CSA equal to 145.9 mm$^2$ (and in example 1-2 equal to 281.7 mm$^2$), and a portion constituted by the first deposition tube of the first rod having a CSA equal to 180.6 mm$^2$ (44.8 mm$^2$ for example 1-2). The smaller proportion of the deposition tube of example 1-2 compared with example 1-1 serves to guarantee better attenuation performance in the optical fiber drawn from the corresponding preform. In practice, the same deposition tube may be used for the first rod, of CSA equal to 180.6 mm$^2$, in each of the examples 1-1 and 1-2. Chemical etching is applied to the first rod in example 1-2 in order to reduce the CSA of the first deposition tube.

Similarly, the intended profiles in examples 3-1, 3-2, and 3-3 are identical. In example 3-1, the first deposition tube of the first rod is removed completely by a chemical etching method whereas in example 3-3, the intermediate cladding is constituted exclusively by the first deposition tube of the first rod, with example 3-2 constituting an intermediate configuration between examples 3-1 and 3-3. In example 3-3, the purity of the tube of the first rod must be close to that of glass deposited by CVD if it is desired to conserve attenuation that is compatible with Recommendation G.652.

In Table III, the values $2R_n$ designate respectively the diameters of the central core $2R_1$, of the deposited portion of the intermediate cladding $2R_2$, and of the buried trench $2R_3$; the value D10 designates the diameter of the first rod of the preform, and the value D20 designates the diameter of the second rod of the preform; the value D.Total designates the total diameter of the overcladded preform.

Table III

| | First rod 10 | | | | Second rod 20 | | Overcladding |
|---|---|---|---|---|---|---|---|
| | $2R_1$ | $2R_2$ | $2R_3$ | D10 | $2R_3$ | D20 | D.Total |
| Unit | mm | mm | mm | mm | mm | mm | mm |
| Comp.ex. 1A | 6.07 | 14.63 | 20.81 | 25.97 | -- | -- | 98.5 |
| Comp.ex. 1B | 9.3 | 22.41 | 31.88 | 39.79 | -- | -- | 150.9 |
| Ex. 1-1 | 9,3 | 16.5 | -- | 22.41 | 31.88 | 37.2 | 150.9 |
| Ex. 1-2 | 9.3 | 21.1 | -- | 22.41 | 31.88 | 37.2 | 150.9 |
| Comp.ex. 2A | 7.63 | 18.39 | 26.5 | 32.64 | -- | -- | 123.8 |
| Comp.ex. 2B | 11.69 | 28.18 | 40.61 | 50.01 | -- | -- | 189.7 |
| Ex. 2 | 11.69 | 20.74 | -- | 28.17 | 40.61 | 46.75 | 189.7 |
| Comp.ex. 3A | 5.5 | 12.98 | 20.83 | 25.97 | -- | -- | 87.9 |

(continued)

| | First rod 10 | | | | Second rod 20 | | Overcladding |
|---|---|---|---|---|---|---|---|
| Comp.ex. 3B | 9.89 | 23.33 | 37.44 | 46.68 | -- | -- | 158 |
| Ex. 3-1 | 9.89 | 23.33 | -- | 23.33 | 37.44 | 42.05 | 158 |
| Ex. 3-2 | 9.89 | 17.51 | -- | 23.33 | 37.44 | 42.05 | 158 |
| Ex. 3-3 | 9.89 | -- | -- | 23.33 | 37.44 | 42.05 | 158 |

In Table III, it can clearly be seen that the buried trench of the comparative examples is deposited in the first rod whereas it is deposited in the second rod for the examples of the invention. It can also be seen from Table III that the outside diameter of the intermediate trench is equal to $2R_2$ in the comparative examples; whereas the outside diameter of the intermediate trench is equal to D10 in the examples of the invention. This is represented by the dashed-line circle in Figure 3; the intermediate cladding is made up of a deposited portion having an outside radius $R_2$ plus a portion of tube having a diameter D10.

In Table IV, the values $CSA_n$ designate respectively the cross-section areas of the central core $CSA_1$, of the deposited intermediate trench $CSA_2$, and of the buried trench $CSA_3$; the values $CSA_{T10}$ and $CSA_{T20}$ designate respectively the cross-section areas of the tubes used to form the first and second rods; and the values CSA10 and CSA20 designate respectively the cross-section areas of the first and second rods of the preform.

It should be observed that the inside diameter of the buried trench of a preform of the invention is D10, i.e. the outside diameter of the deposition tube of the first rod, whereas the inside diameter of the buried trench of a preform of the comparative examples is $2R_2$, i.e. the outside diameter of the intermediate trench. Thus, for.the preforms corresponding to the examples of the invention, $CSA_3$ is calculated using the following formula: $CSA_3 = \pi \times ((2R3)^2 - D10^2)/4$ (or $CSA_3 = \pi \times (R3^2 - \frac{1}{4} \times D10^2)$) whereas the $CSA_3$ of the comparative examples is obtained from the following formula:

$$CSA_3 = \pi \times ((2R3)^2 - (2R_2)^2)/4 \text{ (or } CSA_3 = \pi \times (R3^2 - R_2^2)).$$

Table IV

| | First rod 10 | | | | | Second rod 20 | | |
|---|---|---|---|---|---|---|---|---|
| | $CSA_1$ | $CSA_2$ | $CSA_3$ | $CSA_{T10}$ | CSA10 | $CSA_3$ | $CSA_{T20}$ | CSA20 |
| Unit | mm$^2$ | mm$^2$ | mm$^2$ | mm$^2$ | mm$^2$ | mm$^2$ | mm$^2$ | mm$^2$ |
| Comp.ex. 1A | 28.94 | 139.2 | 172 | 189.6 | 529.7 | -- | -- | -- |
| Comp.ex. 1 B | 67.93 | 326.5 | 403.8 | 445.2 | 1243.4 | -- | -- | -- |
| Ex. 1-1 | 67.93 | 145.9 | -- | 180.6 | 394.4 | 403.8 | 288.6 | 692.4 |
| Ex. 1-2 | 67.93 | 281.7 | -- | 44.8 | 394.4 | 403.8 | 288.6 | 692.4 |
| Comp.ex. 2A | 45.72 | 219.9 | 285.9 | 285.2 | 836.7 | -- | -- | -- |
| Comp.ex. 2B | 107.33 | 516.4 | 671.6 | 669 | 1964.3 | -- | -- | -- |
| Ex. 2 | 107.33 | 230.5 | -- | 285.4 | 623.2 | 672 | 421.3 | 1093.3 |
| Comp.ex. 3A | 23.76 | 108.6 | 208.5 | 188.9 | 529.8 | -- | -- | -- |
| Comp.ex. 3B | 76.82 | 350.7 | 673.5 | 610.5 | 1711.5 | -- | -- | -- |
| Ex. 3-1 | 76.82 | 350.7 | -- | -- | 427.5 | 673.5 | 287.8 | 961.3 |
| Ex. 3-2 | 76.82 | 163.9 | -- | 186.8 | 427.5 | 673.5 | 287.8 | 961.3 |
| Ex. 3-3 | 76.82 | -- | -- | 350.7 | 427.5 | 673.5 | 287.8 | 961.3 |

As mentioned above, the comparative examples 1 B, 2B, and 3B are fictitious examples of preforms that it ought to be possible to fabricate on benches having very large capacities. In particular, example 1B is a preform that would require a deposition bench having a depositable CSA of 800 mm$^2$ ($CSA_1 + CSA_2 + CSA_3 = 798.23$ mm$^2$). Likewise, example 2B

is a preform that would require a deposition bench having a depositable CSA of the order of 1300 mm$^2$, and example 3B is a preform that would require a deposition bench having a depositable CSA of the order of 1100 mm$^2$.

It can clearly be seen in Table IV that although the preforms of the invention are of large capacity, they are capable of being fabricated on deposition benches having depositable CSAs that are much smaller than for the comparative examples 1 B, 2B, and 3B. In particular, example 1-1 requires a deposition bench having a depositable CSA of the order of 220 mm$^2$ (CSA$_1$+CSA$_2$ = 213.83 mm$^2$) for the first rod and a deposition bench having a depositable CSA of about 400 mm$^2$ (CSA$_3$ = 403.8 mm$^2$) for the second rod. Likewise, example 1-2 requires a deposition bench having a depositable CSA of about 350 mm$^2$ (CSA$_1$+CSA$_2$ = 349.63 mm$^2$) for the first rod and a deposition bench having a depositable CSA of about 400 mm$^2$ (CSA$_3$ = 403.8 mm$^2$) for the second rod. Thus, in comparison with example 1B, examples 1-1 and 1-2 enable fat preforms to be made having a total diameter D.Total of about 150 mm while using deposition benches of small and medium capacity.

Similarly, example 2 requires a deposition bench having a depositable CSA of the order of 340 mm$^2$ (CSA$_1$+CSA$_2$ = 337.83 mm$^2$) for the first rod and a deposition bench having a depositable CSA of the order of 670 mm$^2$ (CSA$_3$ = 672 mm$^2$) for the second rod. Thus, in comparison with example 2B, example 2 makes it possible to make a very fat preform having a total diameter D.Total of about 190 mm, while using deposition benches of medium capacity.

Likewise, example 3-1 requires a deposition bench having a depositable CSA of the order of 430 mm$^2$ for the first rod and a deposition bench having a depositable CSA of the order of 670 mm$^2$ for the second rod; example 3-2 requires a deposition bench having a depositable CSA of about 240 mm$^2$ for the first rod and a deposition bench having a depositable CSA of about 670 mm$^2$ for the second rod; and example 3-3 requires a deposition bench having a depositable CSA of about 80 mm$^2$ for the first rod and a deposition bench having a depositable CSA of about 670 mm$^2$ for the second rod. Thus, in comparison with example 3B, examples 3-1, 3-2, and 3-3 make it possible to make fat preforms having a total diameter D.Total of about 158 mm, while using deposition benches of small and medium capacity.

In Table V, the value CSA.Deposits designates the cross-section area of the zones obtained by deposition, i.e. the values CSA$_1$, CSA$_2$, and CSA$_3$ added together. The value CSA.Tube designates the cross-section area of the zones occupied by the tubes used for making the preform, i.e. the values CSA$_{T10}$ and CSA$_{T20}$ added together. The value CSA.Overcladding designates the cross-section area of the zone obtained by overcladding out the second rod in order to obtain the final preform ready for drawing. The value CSA.Total designates the cross-section area of the built-out preform. Table V also gives the ratios of these values for each example compared with the comparative examples.

Table V

| | CSA. Deposits | CSA. Tube | CSA. Over-cladding | CSA. Total | CSA.Deposits/ CSA. Total |
|---|---|---|---|---|---|
| Unit | mm$^2$ | mm$^2$ | mm$^2$ | mm$^2$ | - |
| Comp.ex. 1A | 340.1 | 189.6 | 7090 | 7620 | 4.46% |
| Comp ex. 1 B | 798.2 | 445.2 | 16641 | 17884 | 4.46% |
| Ex. 1-1 | 617.6 | 469.2 | 16797 | 17884 | 3.45% |
| *Ratio ex.1-1/comp.ex. 1A* | 1.82 | 2.47 | 2.37 | 2.35 | 0.77 |
| Ex. 1-2 | 753.4 | 333.4 | 16797 | 17884 | 4.21% |
| *Ratio ex. 1-2/comp.ex. 1A* | 2.22 | 1.76 | 2.37 | 2.35 | 0.94 |
| Comp.ex. 2A | 551.5 | 285.2 | 11201 | 12038 | 4.58% |
| Comp.ex. 2B | 1295.3 | 669 | 26299 | 28263 | 4.58% |
| Ex. 2 | 1009.8 | 706.7 | 26547 | 28264 | 3.57% |
| *Ratio ex. 2 /comp. ex. 2A* | 1.83 | 2.48 | 2.37 | 2.35 | 0.78 |
| Comp.ex. 3A | 340.9 | 350.7 | 5377 | 6069 | 5.62% |
| Comp.ex. 3B | 1101 | 610.5 | 17895 | 19607 | 5.62% |
| Ex. 3-1 | 1101 | 287.8 | 18218 | 19607 | 5.62% |

(continued)

| | CSA. Deposits | CSA. Tube | CSA. Over-cladding | CSA. Total | CSA.Deposits/ CSA. Total |
|---|---|---|---|---|---|
| *Ratio ex. 3-1/comp. ex. 3A* | 3.23 | 0.82 | 3.39 | 3.23 | 1.00 |
| Ex. 3-2 | 914.2 | 474.6 | 18218 | 19607 | 4.66% |
| *Ratio ex. 3-2/comp. ex. 3A* | 2.68 | 1.35 | 3.39 | 3.23 | 0.83 |
| Ex. 3-3 | 750.3 | 638.5 | 18218 | 19607 | 3.83% |
| *Ratio ex. 3-3/comp. ex. 3A* | 2.20 | 1.82 | 3.39 | 3.23 | 0.68 |

The method of the invention makes it possible to achieve preforms having buried trenches of very large sizes. In particular, the CSA of the buried trench $CSA_3$ lies in the range 300 mm$^2$ to 700 mm$^2$. In addition, the method of the invention makes it possible to fabricate large-capacity preforms while using deposition benches of small and/or medium capacity. In particular, the CSAs of the zones deposited in each of the rods ($CSA_1+CSA_2$ in the first rod 10, and $CSA_3$ in the second rod 20) is less than 700 mm$^2$, even though the final preform is of large size with a diameter greater than or equal to 140 mm.

The productivity of optical fiber fabrication drawn from a preform fabricated by the method of the invention is thus improved. In example 1-1, productivity is increased by 29% relative to comparative example 1A. The preform of example 1-1 requires 1.82 times as much deposition as the preform of prior art comparative example 1A, but presents capacity that is 2.35 times greater. For given deposition quantity, it is therefore possible to draw 29% more fiber with a preform of example 1-1 compared with prior art preforms 1A and 1B. Using the same reasoning, in example 1-2, the increase in productivity is 6% compared with examples 1A and 1B; with example 2, the increase in productivity is 28% relative to examples 2A and 2B.

In example 3-1, in which the first tube of the first rod is removed completely by chemical etching, there is no increase in productivity since the proportion of deposit is the same as in the comparative example. Nevertheless, it is possible to fabricate the preform much more quickly because the first and second rods are fabricated separately. With examples 3-2 and 3-3, the productivity increases are respectively 20% and 47% compared with examples 3A and 3B.

The method of the invention thus makes it possible to make a preform of very large capacity without requiring significant modification to equipment. In addition, the first and second rods may be fabricated in parallel, thereby increasing the fabrication yield of the preform.

The preform as obtained in this way enables a greater length of fiber to be drawn that is particularly well adapted to use in optical fiber systems installed with customers, of the FTTH or FTTC type, in which the optical fiber is subjected to severe bending constraints because of the miniaturization of the optical units or because of fastening by stapling.

In particular, the optical fiber drawn from a preform of the invention satisfies the criteria of Recombination G.652 in terms of chromatic dispersion, mode diameter, and cut-off wavelength. The optical fiber drawn from a preform of the invention also satisfies the criteria of Recommendation G.657 in terms of bending losses.

The invention also makes it possible to fabricate tubes of large capacity and of very good quality. The refractive index and the volume of the trench can be very well controlled using the method of the invention. In particular, the refractive index difference of the buried trench relative to the outer cladding presents longitudinal variation over the entire length of the tube that is less than 10%, and the volume of the buried trench presents longitudinal variation of less than 15% over the entire length of the tube.

Such a tube may be used as a starting tube for fabricating a primary preform by chemical vapor deposition (CVD). Once the deposition has been performed inside such a tube, the primary preform is built out or a sleeve is fitted thereto in order to produce a final preform, and an optical fiber may be drawn from the final preform.

## Claims

1.   A method of fabricating an optical fiber preform that comprises, from the center towards the periphery, a central core, an intermediate cladding, a buried trench, and an outer cladding, the method comprising the steps of:

· preparing a first rod (10) constituting at least the central core, the first rod (10) being prepared by chemical vapor deposition (CVD) in a first tube;

· preparing a hollow second rod (20) constituting at least the buried trench, the second rod (20) being prepared by chemical vapor deposition (CVD), preferably plasma-assisted chemical vapor deposition (PCVD), in a second tube; and

· fitting the second rod (20) as a sleeve on the first rod (10).

2. The method according to claim 1, further including:

   i) a step consisting in stretching the first rod (10) before fitting the second rod (20) as a sleeve; and/or
   ii) a step consisting in chemically etching at least a portion of the first tube before fitting the second rod (20) as a sleeve; and/or
   iii) a step of overcladding the outside of the second rod (20) or fitting a sleeve thereto in order to reach a final preform diameter greater than or equal to 140 mm.

3. The method of claim 2, wherein the cross-section area of the zones deposited in each of the rods is less than 700 mm$^2$.

4. The method of any preceding claim, wherein the buried trench:

   i) is deposited with dopants at a concentration controlled so that the buried trench presents a refractive index difference relative to the outer cladding lying in the range $-4 \times 10^{-3}$ to $-10 \times 10^{-3}$; and/or
   ii) has the concentration of dopants controlled in such a manner that the buried trench presents longitudinal variation of index of less than 10% over the entire length of the second rod (20) ; and/or
   iii) is deposited until the buried trench presents a cross-section area lying in the range 300 mm$^2$ to 700 mm$^2$, preferably the cross-section area of the buried trench presents longitudinal variation of less than 10% over the entire length of the second rod (20); and/or
   iv) is deposited with dopant concentration control until the buried trench presents a value for the product of the CSA of the buried trench multiplied by the refractive index difference $\Delta n_3$ of the buried trench and divided by the number Pi ($\pi$) lying in the range $-2550 \times 10^{-3}$ mm$^2$ to $-760 \times 10^{-3}$ mm$^2$, preferably the value of said product presents longitudinal variation of less than 15% over the entire length of the second rod (20).

5. An optical fiber preform that comprises, from the center towards the periphery, a central core, an intermediate cladding, a buried trench, and an outer cladding, wherein the buried trench presents:

   · a refractive index difference relative to the outer cladding lying in the range $-4 \times 10^{-3}$ to $-10 \times 10^{-3}$ with longitudinal variation of less than 10% over the entire length of the preform; and
   · a value for the product of the CSA of the buried trench multiplied by the refractive index difference $\Delta n_3$ of the buried trench and divided by the number Pi ($\pi$) lying in the range $-2550 \times 10^{-3}$ mm$^2$ to $-760 \times 10^{-3}$ mm$^2$ with longitudinal variation of less than 15% over the entire length of the preform;

   said preform optionally presenting a diameter greater than or equal to 140 mm.

6. The preform of claim 5, wherein the buried trench presents a cross-section area lying in the range 300 mm$^2$ to 700 mm$^2$, preferably the cross-section area of the buried trench presents longitudinal variation of less than 10% over the entire length of the preform.

7. The preform of any one of claims 5-6, wherein the core presents a refractive index difference:

   i) relative to the outer cladding lying in the range $4 \times 10^{-3}$ to $6 \times 10^{-3}$ and/or
   ii) relative to the intermediate cladding lying in the range $4 \times 10^{-3}$ to $6 \times 10^{-3}$.

8. A method of fabricating an optical fiber, comprising the steps consisting in:

   · fabricating a preform in accordance with the method of any one of claims 1 to 4; and
   · drawing an optical fiber from said preform in a fiber-drawing tower.

9. An optical fiber obtained by drawing from the preform according to any one of claims 5-7.

10. An optical fiber transmission system comprising at least a portion of fiber according to claim 9 or at least a portion of fiber fabricated by the method of claim 8.

**Patentansprüche**

1. Verfahren zur Herstellung einer Lichtwellenleitervorform, die vom Zentrum zum Randbereich einen zentralen Kern, einen zwischenliegenden Mantel, einen eingebetteten Graben und einen äußeren Mantel umfasst, mit folgenden Schritten:

   - Herstellen eines ersten Stabs (10), der wenigstens den zentralen Kern bildet, wobei der erste Stab (10) mittels chemischer Gasphasenabscheidung (CVD) in einer ersten Röhre hergestellt wird,
   - Herstellen eines hohlen zweiten Stabs (20), der wenigsten den eingebetteten Graben bildet, wobei der zweite Stab (20) mittels chemischer Gasphasenabscheidung (CVD), vorzugsweise plasmagestützter chemischer Gasphasenabscheidung (PCVD) in einer zweiten Röhre hergestellt wird, und
   - Aufstecken des zweiten Stabs (20) als Hülle auf den ersten Stab (10).

2. Verfahren nach Anspruch 1, ferner mit:

   i) einem Schritt, der darin besteht, den ersten Stab (10) zu strecken, bevor der zweite Stab (20) als Hülle aufgesteckt wird, und/oder
   ii) einem Schritt, der darin besteht, wenigstens einen Teil der ersten Röhre chemisch zu ätzen, bevor der zweite Stab (20) als Hülle aufgesteckt wird, und/oder
   iii) einem Schritt, der darin besteht, die Außenseite des zweiten Stabs (20) zu ummanteln oder eine Hülle daran anzubringen, um einen abschließenden Vorformdurchmesser von größer oder gleich 140 mm zu erreichen.

3. Verfahren nach Anspruch 2, wobei die Querschnittsfläche der in jedem der Stäbe eingebrachten Zonen weniger als 700 mm$^2$ beträgt.

4. Verfahren nach einem der vorhergehenden Ansprüche, wobei:

   i) der eingebettete Graben mit Dotierstoffen bei einer Konzentration abgeschieden wird, die so gesteuert wird, dass der eingebettete Graben eine Brechungsindexdifferenz relativ zu dem äußeren Mantel aufweist, die im Bereich $-4\times10^{-3}$ bis $-10\times10^{-3}$ liegt, und/oder
   ii) die Konzentration der Dotierstoffe des eingebetteten Grabens derart gesteuert wird, dass der eingebettete Graben eine longitudinale Indexvariation von weniger als 10% über die gesamte Länge des zweiten Stabs (20) aufweist, und/oder
   iii) der eingebettete Graben abgeschieden wird, bis der eingebettete Graben eine Querschnittsfläche aufweist, die im Bereich von 300 mm$^2$ bis 700 mm$^2$ liegt, wobei die Querschnittsfläche des eingebetteten Grabens vorzugsweise eine longitudinale Variation von weniger als 10% über die gesamte Länge des zweiten Stabs (20) aufweist, und/oder
   iv) der eingebettete Graben mit einer Dotierstoffkonzentrationssteuerung abgeschieden wird, bis der eingebettete Graben einen Wert für das Produkt der Querschnittsfläche des eingebetteten Grabens multipliziert mit der Brechungsindexdifferenz $\Delta n_3$ des eingebetteten Grabens und geteilt durch die Zahl Pi ($\pi$) aufweist, der im Bereich von $-2550\times10^{-3}$ mm$^2$ bis $-760\times10^{-3}$ mm$^2$ liegt, wobei der Wert des Produkts vorzugsweise eine longitudinale Variation von weniger als 15% über die gesamte Länge des zweiten Stabs (20) aufweist.

5. Lichtwellenleitervorform, die vom Zentrum zum Randbereich einen zentralen Kern, einen zwischenliegenden Mantel, einen eingebetteten Graben und einen äußeren Mantel umfasst, wobei der eingebettete Graben Folgendes aufweist:

   - eine Brechungsindexdifferenz relativ zum äußeren Mantel, die im Bereich $-4\times10^{-3}$ bis $-10\times10^{-3}$ liegt, mit longitudinaler Variation von weniger als 10% über die gesamte Länge der Vorform, und
   - einen Wert für das Produkt der Querschnittsfläche des eingebetteten Grabens multipliziert mit der Brechungsindexdifferenz $\Delta n_3$ des eingebetteten Grabens und geteilt durch die Zahl Pi ($\pi$), der im Bereich $-2550\times10^{-3}$ mm$^2$ bis $-760\times10^{-3}$ mm$^2$ liegt, mit longitudinaler Variation von weniger als 15% über die gesamte Länge der Vorform,

   wobei die Vorform wahlweise einen Durchmesser von größer oder gleich 140 mm aufweist.

6. Vorform nach Anspruch 5, wobei der eingebettete Graben eine Querschnittsfläche aufweist, die im Bereich von 300 mm$^2$ bis 700 mm$^2$ liegt, wobei die Querschnittsfläche des eingebetteten Grabens vorzugsweise eine longitudinale Variation von weniger als 10% über die gesamte Länge der Vorform aufweist.

**7.** Vorform nach Anspruch 5 oder 6, wobei der Kern eine Brechungsindexdifferenz aufweist, die:

i) relativ zum äußeren Mantel im Bereich von 4x10$^{-3}$ bis 6x10$^{-3}$ liegt, und/oder
ii) relativ zum zwischenliegenden Mantel im Bereich von 4x10$^{-3}$ bis 6x10$^{-3}$ liegt.

**8.** Verfahren zur Herstellung eines Lichtwellenleiters, mit folgenden Schritten:

- Herstellen einer Vorform nach dem Verfahren gemäß einem der Ansprüche 1 bis 4, und
- Ziehen eines Lichtwellenleiters aus dieser Vorform in einem Faserziehturm.

**9.** Lichtwellenleiter erhältlich durch Ziehen aus einer Vorform nach einem der Ansprüche 5 bis 7.

**10.** Lichtwellenleiterübertragungssystem mit wenigstens einem Teil an Lichtwellenleitern nach Anspruch 9 oder wenigstens einem Teil an Lichtwellenleitern, die nach dem Verfahren gemäß Anspruch 8 hergestellt wurden.


**Revendications**

**1.** Procédé de fabrication d'une préforme de fibre optique qui comprend, du centre vers la périphérie, un coeur central, une gaine intermédiaire, une tranchée enterrée et une gaine extérieure, le procédé comprenant les étapes consistant :

- à préparer un premier barreau (10) constituant au moins le coeur central, le premier barreau (10) étant préparé par dépôt chimique en phase vapeur (CVD) dans un premier tube ;
- à préparer un deuxième barreau (20) creux constituant au moins la tranchée enterrée, le deuxième barreau (20) étant préparé par dépôt chimique en phase vapeur (CVD), de préférence par dépôt chimique en phase vapeur assisté par plasma (PCVD), dans un deuxième tube ;
- à ajuster le deuxième barreau (20) sous forme de manchon sur le premier barreau (10).

**2.** Procédé selon la revendication 1, comportant en outre :

i) une étape consistant à étirer le premier barreau (10) avant d'ajuster le deuxième barreau (20) sous forme de manchon ; et/ou
ii) une étape consistant à attaquer chimiquement au moins une partie du premier tube avant d'ajuster le deuxième barreau (20) sous forme de manchon ; et/ou
iii) une étape consistant à gainer l'extérieur du deuxième barreau (20) ou à ajuster un manchon à celui-ci afin d'atteindre un diamètre de préforme final supérieur ou égal à 140 mm.

**3.** Procédé de la revendication 2, dans lequel la surface en coupe transversale des zones déposées dans chacun des barreaux est inférieure à 700 mm$^2$.

**4.** Procédé de l'une des revendications précédentes, dans lequel la tranchée enterrée :

i) est déposée avec des dopants à une concentration contrôlée de sorte que la tranchée enterrée présente une différence d'indice de réfraction par rapport à la gaine extérieure comprise dans la plage allant de -4x10$^{-3}$ à -10x10$^{-3}$ ; et/ou
ii) a la concentration de dopants contrôlée de manière à ce que la tranchée enterrée présente une variation longitudinale d'indice inférieure à 10% sur toute la longueur du deuxième barreau (20) ; et/ou
iii) est déposée jusqu'à ce que la tranchée enterrée présente une surface en coupe transversale comprise dans la plage allant de 300 mm$^2$ à 700 mm$^2$, de préférence la surface en coupe transversale de la tranchée enterrée présente une variation longitudinale inférieure à 10% sur toute la longueur du deuxième barreau (20) ; et/ou
iv) est déposée avec un contrôle de concentration de dopant jusqu'à ce que la tranchée enterrée présente une valeur pour le produit de la surface en coupe transversale de la tranchée enterrée multipliée par la différence d'indice de réfraction $\Delta n_3$ de la tranchée enterrée et divisée par le nombre Pi ($\pi$) comprise dans la plage allant de -2550x10$^{-3}$ mm$^2$ à -760x10$^{-3}$ mm$^2$, de préférence la valeur dudit produit présente une variation longitudinale inférieure à 15% sur toute la longueur du deuxième barreau (20).

**5.** Préforme de fibre optique qui comprend, du centre vers la périphérie, un coeur central, une gaine intermédiaire, une tranchée enterrée et une gaine extérieure, dans laquelle la tranchée enterrée présente :

- une différence d'indice de réfraction par rapport à la gaine extérieure comprise dans la plage allant de $-4 \times 10^{-3}$ à $-10 \times 10^{-3}$ avec une variation longitudinale inférieure à 10% sur toute la longueur de la préforme ; et
- une valeur pour le produit de la surface en coupe transversale de la tranchée enterrée multipliée par la différence d'indice de réfraction $\Delta n_3$ de la tranchée enterrée et divisée par le nombre Pi ($\pi$) comprise dans la plage allant de $-2550 \times 10^{-3}$ mm$^2$ à $-760 \times 10^{-3}$ mm$^2$ avec une variation longitudinale inférieure à 15% sur toute la longueur de la préforme ;

ladite préforme présentant éventuellement un diamètre supérieur ou égal à 140 mm.

**6.** Préforme de la revendication 5, dans laquelle la tranchée enterrée présente une surface en coupe transversale comprise dans la plage allant de 300 mm$^2$ et 700 mm$^2$, de préférence la surface en coupe transversale de la tranchée enterrée présente une variation longitudinale inférieure à 10% sur toute la longueur de la préforme.

**7.** Préforme de l'une quelconque des revendications 5 et 6, dans laquelle le coeur présente une différence d'indice de réfraction :

i) par rapport à la gaine extérieure comprise dans la plage allant de $4 \times 10^{-3}$ à $6 \times 10^{-3}$ et/ou
ii) par rapport à la gaine intermédiaire comprise dans la plage allant de $4 \times 10^{-3}$ à $6 \times 10^{-3}$.

**8.** Procédé de fabrication d'une fibre optique, comprenant les étapes consistant :

- à fabriquer une préforme en conformité avec le procédé de l'une quelconque des revendications 1 à 4 ; et
- à étirer une fibre optique à partir de ladite préforme dans une tour de fibrage.

**9.** Fibre optique obtenue par étirage à partir de la préforme selon l'une quelconque des revendications 5 à 7.

**10.** Système de transmission par fibres optiques comprenant au moins une partie de fibre selon la revendication 9 ou au moins une partie de fibre fabriquée par le procédé de la revendication 8.

FIG. 1

FIG. 2

**FIG.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1845399 A
- EP 1785754 A
- WO 2007009450 A
- FR 2896795 A
- US 2008031582 A
- EP 1000909 A
- WO 2008087132 A
- WO 2010003856 A
- US 20070003198 A